# EUROPÄISCHE PATENTSCHRIFT

(11) **EP 1 153 777 B1**
(45) Veröffentlichungstag und Bekanntmachung des Hinweises auf die Patenterteilung: **14.07.2004**
(21) Anmeldenummer: 01110648.1
(22) Anmeldetag: 02.05.2001
(51) Int. Cl.: B60J 1/20, B60J 7/00

(54) **Rollo-Anordnung zum Abdecken einer transparenten Fahrzeug-Karosseriefläche**
Roller blind device for covering a transparent plane of the body work of a vehicle
Store à enrouleur pour couvrir une pièce transparente de la carosserie d'un véhicule

(30) Priorität: 10.05.2000 DE 10022546
(43) Veröffentlichungstag der Anmeldung: 14.11.2001
(73) Patentinhaber: Webasto Vehicle Systems International GmbH, 82131 Stockdorf (DE)
(72) Erfinder: Schulz, Horst-Martin, 82211 Herrsching (DE)
(74) Vertreter: Wiese, Gerhard

(56) Entgegenhaltungen:
- EP-A- 0 545 062
- EP-A- 0 747 562
- EP-A- 0 834 414
- DE-A- 19 803 129
- DE-C- 19 716 196
- DE-C- 19 745 866
- US-A- 5 067 546
- DATABASE WPI Section PQ, Week 199832 Derwent Publications Ltd., London, GB; Class Q48, AN 1998-375292 XP002202261 -& NL 1 004 383 C (ALUMINIUM VERKOOP ZUID BV), 8. Mai 1998 (1998-05-08)

## Beschreibung

Die Erfindung betrifft eine Rollo-Anordnung zum wahlweisen Abdecken einer transparenten Fahrzeug-Karosseriefläche, wie etwa eines Dach-Glasdeckels, mit einem Rollostoff, einem an dessen Vorderende fest angebrachten, als Profilteil gebildeten Ausziehspriegel, und einem in seitliche Führungsschienen eingreifenden Kupplungsteil zur Verbindung des Ausziehspriegels mit seitlichen Führungen.

Eine derartige Rollo-Anordnung ist aus der DE 197 45 866 C1 bekannt. Bei einer vom Rollo des Porsche 993 Targa bekannten Rolloanordnung ist der Zugspriegel als starres Alu-Strangpressprofil gebildet, das eine Befräsung aufweist, die nach einer Drehbewegung mit einer entsprechenden Ausfräsung in das Kupplungsteil in Eingriff gelangt, wobei der Rollostoff vor dieser Montage bereits in den Zugspriegel eingehängt ist. Nachteilig an dieser bekannten Rollo-Anordnung ist, daß diese sehr leicht versehentlich ausgehängt werden kann, was zu einem unerwünschten plötzlichen Rückschnellen des Rollostoffs führt.

Bei einer weiteren bekannten Rollo-Anordnung sind im Zugspriegel federbelastete Bolzen angeordnet, die seitlich in ein Paar von Kupplungsteilen eingreifen. Diese bekannte Rollo-Anordnung erfordert mehrere Bauteile, was mit Mehrkosten und erhöhtem Platzbedarf verbunden ist.

Schließlich ist noch vom Renault Clio Spoilerdach eine Rollo-Anordnung bekannt, bei welcher der Zugspriegel ohne Nutzung eines Kupplungsteils mit seitlich eingesteckten Gleitern in die seitlichen Führungsschienen eingesetzt ist. Bei dieser Konstruktion ist erforderlich, daß die Gleiter vorab mit dem Zugspriegel in die Führungsschienen montiert werden müssen.

Die DE 198 03 129 A1 offenbart eine Rollo-Anordnung gemäß dem Oberbegriff des Anspruchs 1 zum wahlweisen Abdecken eines Kraftfahrzeug-Heckfensters, mit einem Rollostoff, einem an dessen Vorderende befestigten, als Hohlprofilteil mit einem Innenraum gebildeten Ausziehspriegel, und einem in seitliche Führungsschienen eingreifenden stabförmigen Kupplungsteil zur Verbindung des Ausziehspriegels mit seitlichen Führungen. Die aus dem Kupplungsteil und dem Ausziehspriegel gebildete Einheit ist jedoch nicht in einfacher Weise zu montieren und demontieren.

Angesichts dieses Standes der Technik liegt der Erfindung die Aufgabe zugrunde, eine Rollo-Anordnung der eingangs genannten Art zu schaffen, die eine sichere Verbindung von Ausziehspriegel und Kupplungsteil bei problemloser Montage dieser Einheit gewährleistet.

Gelöst wird diese Aufgabe durch die Merkmale des Anspruchs 1. Vorteilhafte Weiterbildungen der Erfindung sind in den Unteransprüchen angegeben.

Mit anderen Worten ist erfindungsgemäß der Ausziehspriegel in Art einer starren Klammer gebildet, in welche das Kupplungsteil einführbar bzw. die auf das Kupplungsteil aufsetzbar und verrastbar ist. Aufgrund der sich im Klammereingriff miteinander befindlichen Teile, dem Kupplungsteil und dem als Hohlprofil gebildeten Ausziehspriegel wird ein versehentliches Aushängen des Ausziehspriegels zuverlässig verhindert. Außerdem gestaltet sich die Montage der Einheit aus Kupplungsteil und Ausziehspriegel problemlos, weil es lediglich erforderlich ist, das Kupplungsteil durch Einführen in den Ausziehspriegel in diesem zu verrasten. Ebenso gestaltet sich die Demontage diese Anordnung problemlos.

Zur Förderung der problemlosen Montage sowie der Stabilität des gegenseitigen Eingriffs ist vorgesehen, daß die Außenkontur des Kupplungsteils zur formschlüssigen Aufnahme durch den Innenraum des Ausziehspriegels zumindest im wesentlichen dessen Kontur entspricht.

Die vorstehend angesprochene, auf den Querschnitt bezogene Klammerform des Ausziehspriegels kann gemäß einer vorteilhaften Weiterbildung allgemeine Schneckengehäuseform besitzen. Das in Rede stehende Schneckengehäuse besitzt zwei einander gegenüberliegende bogenförmig gekrümmte Wandabschnitte, die in den Einführschlitz des als Hohlprofilteils gebildeten Ausziehspriegels münden und ermöglichen, daß das Kupplungsteil durch axiale Drehung relativ zu dem Ausziehspriegel in diesen eingeführt werden kann. Hierbei stehen zwei Varianten zur Verfügung: Gemäß der einen Variante wird der Ausziehspriegel stationär gehalten und das Kupplungsteil wird in den Ausziehspriegel eingedreht. Gemäß der anderen Variante wird das Kupplungsteil stationär gehalten und der Ausziehspriegel wird auf das Kupplungsteil aufgedreht. Schließlich sind beide Teile in- bzw. aufeinander drehbar, indem sie beide bewegt werden.

Grundsätzlich kann die Verrastung des Kupplungsteils im Innenraum des Ausziehspriegels in unterschiedlicher Weise erzielt werden. Gemäß einer vorteilhaften Weiterbildung der Erfindung ist vorgesehen, daß der Ausziehspriegel das in seinen Innenraum vollständig eingeführte Kupplungsteil im Bereich des Einführschlitzes mittels eines Haltestegs rastend hintergreift, der einen von zwei axialen Rändern des Einführschlitzes bildet.

Um das Verrasten des Kupplungsteils im Ausziehspriegel zu erleichtern bzw. um das Lösen dieser Verrastung zu erleichtern, ist vorteilhafterweise vorgesehen, daß vom Kupplungsteil mittels einer axial verlaufenden Schwächungsstelle ein Raststeg abgetrennt ist, der mit dem Haltesteg federnd zusammenwirkt, wobei der Raststeg eine Nase umfaßt, die aus dem Einführschlitz zur Lösung des Rasteingriffs des Raststegs am Haltesteg vorsteht.

Zur Halterung des Rollostoffs am Ausziehspriegel ist vorteilhafterweise vorgesehen, daß der dem Haltesteg gegenüberliegende Rand des Einführschlitzes zur Aufnahme des ein Versteifungsteil, beispielsweise einen Kederdraht, enthaltende Vorderende des Rollostoffs in Gestalt einer nach außen offenen Rundbiegung auswärts umgebogen ist.

Folgende Vorteile sind durch die erfindungsgemäße Rollo-Anordnung mit Verklammerung von Ausziehspriegel und Kupplungsteil erzielbar:
- Eine bislang erforderliche kostenintensive Befräsung des als Profilteil gebildeten Ausziehspriegels und des Kupplungsteils ist nicht erforderlich.
- Durch die Verrastung in Einbaulage ist kein zusätzliches Sicherheitselement zur Sicherung des Ausziehspriegels am Kupplungsteil erforderlich, um beide Teile gegen eine versehentliche Demontage zu sichern.
- Durch die spezielle Positionierung des Rollostoffs - den Ausziehspriegel von außen abdeckend - wirkt die Zugspannung des Rollostoffs unterstützend zur Verrastung einer versehentlichen Demontage emtgegen. Außerdem ist auf diese Weise der Zugspriegel vor einer Einsicht geschützt, weshalb keine besondere Oberflächengüte des Zugspriegels erforderlich ist, da dieser nicht in Sichtbereich liegt.
- Durch die schneckenhausähnliche, bevorzugt im Querschnitt D-förmige Gestalt des Zugspriegels kann eine größere Überdeckung des Kupplungsteils erreicht werden, wodurch ein Entkoppeln infolge einer missbräuchlichen Anwendung einer vertikalen Kraft von unten besser verhindert wird als bisher und außerdem ein kostengünstigeres Material für Ausziehspriegel und Kupplungsteil eingesetzt werden kann.

Nachfolgend wird die Erfindung anhand der Zeichnungen beispielhaft näher erläutert;
es zeigen:
- Fig. 1: im Querschnitt eine bevorzugte Ausführungsform der Einheit aus Ausziehspriegel und Kupplungsteil einer erfindungsgemäßen Rollo-Anordnung im zusammengebauten Zustand,
- Fig. 2 - 4: den Zusammenbauvorgang der Einheit als Ausziehspriegel und Kupplungsteil von Fig. 1.

Die in Rede stehende Rollo-Anordnung dient zum wahlweisen Abdecken eines Fahrzeuginnenraums gegenüber einer transparenten Fahrzeug-Karosseriefläche, beispielsweise eines Dach-Glasdeckels. Die Rollo-Anordnung umfasst einen Rollostoff 10, der an seinem Vorderende mit einem Ausziehspriegel 11 verbunden ist und ein Kupplungsteil 12 zur Verbindung des Ausziehspriegels 11 mit seitlichen Führungen bzw. mit einem an diesen angreifenden, nicht dargestellten elektromotorischen Antrieb. Das Kupplungsteil 12 greift beidendig in seitliche, ebenfalls nicht gezeigte Führungsschienen ein. Das andere Ende des Rollostoffs 10 ist in an sich bekannter Weise an einem Federstab befestigt, der dazu dient, den Rollostoff 10 aufzuwickeln. Das Abwickeln oder Ausfahren des Rollostoffs hingegen erfolgt mittels des elektromotorischen Antriebs, der den Ausziehspriegel 11 über das Kupplungsteil 12 entlang den seitlichen Führungsschienen in Rolloausfahrrichtung fördert.

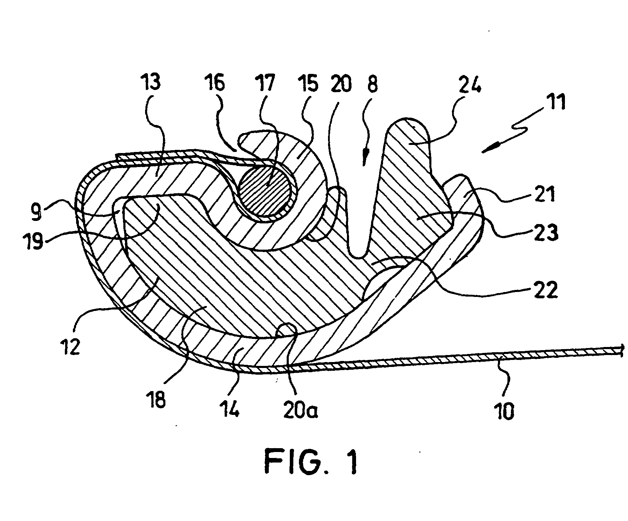

Die Besonderheit der in Fig. 1 gezeigten Einheit aus Ausziehspriegel 11 und Kupplungsteil 12 besteht darin, dass der Ausziehspriegel 11 als Hohlprofilteil in Art einer starren Klammer mit einem das allgemein stabförmige Kupplungsteil 12 im Rastsitz aufnehmenden Innenraum 9 gebildet ist, der zur Einführung des Kupplungsteils 12 über einen axialen Einführschlitz 8 zugänglich ist. Um den Rasteingriff zu ermöglichen bzw. um das Auflösen des Rasteingriffs zu gewährleisten, ist das Kupplungsteil 12 mittels einer Schwächungsstelle 22 in zwei Teile unterteilt, nämlich in einen Grundkörper 18, dessen Außenkontur der Kontur des Innenraums 9 des Ausziehspriegels entspricht, und einen Raststeg 23, der bei in den Innenraum 9 eingeführtem Kupplungsteil 12 im Einführschlitz 8 des Innenraums 9 zu liegen kommt und dort einen Haltesteg 21 umgreift, welcher als einwärts gebogener Rand des Einführschlitzes 8 am dortigen Außenende des Ausziehspriegels 11 gebildet ist.

Wie aus Fig. 1 hervorgeht, ist der Ausziehspriegel 11 im Querschnitt in etwa in Art eines Schneckengehäuses gebildet, dessen Zugang durch den Einführschlitz 8 gebildet ist. Die Gestalt des Ausziehspriegels kann jedoch auch als allgemein D-förmig bezeichnet werden. Bei dieser Betrachtungsweise umfaßt der Ausziehspriegel 11 einen geraden D-Schenkel 13 und einen ausgebauchten D-Schenkel 14.

Der D-Schenkel 13 ist verkürzt gebildet; d.h. der D-Schenkel 13 ist nur mit einem Ende integral mit dem ausgebauchten Schenkel 14 verbunden, während sein anderes Ende nicht mit dem ausgebauchten Schenkel 14 vereinigt ist, sondern vielmehr unter Abstand vor diesem in dem einwärts gebogenen Raststeg 23 endet, der den einen Rand des Einführschlitzes 8 begrenzt. Das freie Ende des verkürzten D-Schenkels 13 begrenzt den anderen Rand des Einführschlitzes 8 und ist unter Festlegung einer nach außen offenen Rundbiegung 15 zur Aufnahme des Vorderendes des Rollostoffs 10 geformt. Die Rundbiegung 15 ist so ausgelegt, dass sie nach außen weisend einen Einführspalt 16 für das Vorderende des Rollostoffs 10 beläßt. In an sich bekannter Weise ist das Vorderende des Rollostoffs 10 unter Bildung einer Lasche umgeschlagen und die umgeschlagenen Teile des Rollostoffvorderendes sind an sich beliebiger Weise miteinander verbunden. In dieser durch das Rollostoffvorderende gebildeten Lasche ist in an sich bekannter Weise ein Kederdraht 17 enthalten, dessen Durchmesser unter Berücksichtigung der Stärke des Rollostoffs 10 so gewählt ist, dass die Einheit aus Rollostoffvorderende und Kederdraht 17 form- und kraftschlüssig über den Einführspalt 16 um die Außenseite des ausgebauchten D-Schenkels verlaufend in den Innenraum der Rundbiegung 15 einführbar ist und dort gehalten wird.

Das vom klammerartigen Ausziehspriegel 11 umklammerte Kupplungsteil 12 hat eine dem Innenraum entsprechende Außenkontur. D.h., die Außenkontur des Kupplungsteils 12 hat ebenfalls in etwa die Form eines "D". Sein Grundkörper 18 befindet sich in Fig. 1 zumindest im wesentlichen im vollflächigen Kontakt mit der Innenseite des ausgebauchten Schenkels 14 des Ausziehspriegels 11, während eine im wesentlichen gerade Endseite 19 des Kupplungsteils 12 in vollflächigem Kontakt mit dem verkürzten D-Schenkel 13 des Ausziehspriegels 11 steht. In diese Endseite 19 ist eine in etwa halbzylindrische Lagerschale eingetieft, die zur formschlüssigen Aufnahme des die Rundbiegung 15 aufweisenden Endes des D-Schenkels dient, soweit dieses einwärts über den D-Schenkel 13 vorsteht.

Ermöglicht wird das "Eindrehen" des Kupplungsteils 12 in den Ausziehspriegel 11 bzw. das Aufdrehen desselben auf das Kupplungsteil 12 durch konzentrische kreisrund gebogen verlaufende Wandungsabschnitte 20, 20a, die zum einen auf der Innenseite des ausgebauchten D-Schenkels 14 und andererseits auf der Innenseite des geraden D-Schenkels 13 festgelegt sind.

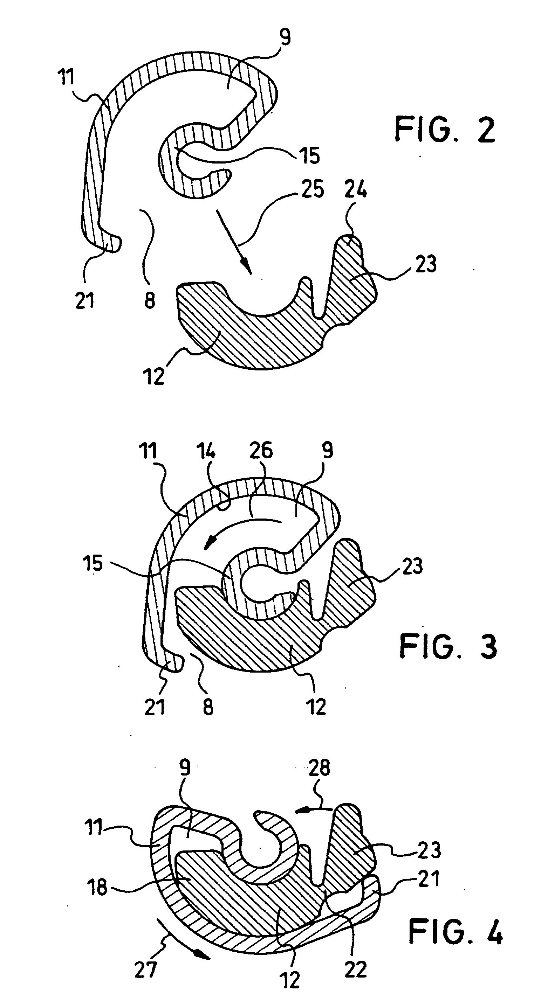

Fig. 2 bis 4 zeigen den Zusammenbau der Einheit aus Ausziehspriegel 11 und Kupplungsteil 12 von Fig. 1. Die Montage des Rollostoffs 10 ist dabei nicht gezeigt. Diese Montage kann wahlweise entweder vor dem Zusammenbau von Ausziehspriegel 11 und Kupplungsteil 12 oder nach dem Zusammenbau erfolgen.

Fig. 2 zeigt die Anfangsstufe des Zusammenbaus, bei welcher das Kupplungsteil 12 in die nicht gezeigten seitlichen Führungsschienen bereits eingesetzt ist. Wie aus Fig. 2 bis 4 hervorgeht, befindet sich das Kupplungsteil 12 hierbei in liegender Position mit nach unten weisendem ausgebauchten Rand und nach oben vorstehendem Raststeg 23, der an seinem Außenende mit einer Nase 24 versehen ist. Der Ausziehspriegel 11 wird nunmehr mit dem Einführschlitz 8 abwärts weisend über dem Kupplungsteil 12 angeordnet und entlang des Pfeils 25 auf das Kupplungsteil 12 abgesenkt, bis der Ausziehspriegel 11 mit seiner Rundbiegung 15 in der hierzu komplementären Einsenkung des Kupplungsteils 12 zu liegen kommt. Hierbei greift das in Fig. 3 linke Ende des Kupplungsteils 12 bereits in den Einführschlitz 8 des Ausziehspriegel 11 ein. Zwischen der Rundbiegung 15 und der hierzu komplementären Eintiefung des Kupplungsteils 12 ist ein Drehlager gebildet, welches es gestattet, den Ausziehspriegel durch Drehung entlang des Pfeils 26 (Fig. 3) im Gegenuhrzeigersinn auf den Kupplungskörper 12 aufzudrehen. Fig. 4 zeigt eine Aufdrehposition des Ausziehspriegels 11, gemäß welcher das Kupplungsteil 12 bereits nahezu vollständig im Innenraum 9 des Ausziehspriegel 11 zu liegen kommt. In dieser Position liegt die Unterseite des Raststegs 23, d.h. des durch die Schwächungsstelle 22 vom Grundkörper 18 elastisch getrennten kleineren Teils auf der Oberseite des Haltestegs 21 am Einführschlitz 8 des Ausziehspriegels 11 an. Ein weiteres Drehen des Ausziehspriegel 11 im Gegenuhrzeigersinn führt dazu, daß der Raststeg 23 um seine Schwächungsstelle 22 entlang dem Pfeil 28 in Fig. 4 auf die Rundbiegung 15 des Ausziehspriegels 11 zu gebogen wird, wobei die Unterseite des mit dem Haltesteg 21 im Eingriff stehenden Raststegs 23 auf der Oberseite des Haltestegs 21 abläuft, bis die gesamte Unterseite des Raststegs 23 auf dem Haltesteg 21 abgelaufen ist, woraufhin, wie in Fig. 1 gezeigt, die in der Schwächungsstelle gespeicherte Federkraft frei kommt und den Raststeg 23 in Abwärtsrichtung (entgegen dem Pfeil 28) bewegt, bis die Unterseite des Raststegs 23 auf der Innenseite des ausgebauchten D-Schenkels 14 des Ausziehspriegels 11 zu liegen kommt. In dieser Position ist der Raststeg 23 durch den Haltesteg 21 übergriffen, wodurch das Kupplungsteil 12 im Ausziehspriegel 11 verrastet gehalten ist.

Um diesen in Fig. 1 gezeigten Rasteingriff zwischen Raststeg 23 und Haltesteg 21 zu lösen, wird die Nase 24 am Außenende des Raststegs 23 in Richtung des Pfeils 28 in Fig. 4 bewegt und der Ausziehspriegel 11 kann in umgekehrter Reihenfolge (Fig. 4 → Fig. 3 → Fig. 2) vom Kupplungsteil 12 gelöst werden.

### Bezugszeichenliste

- 8: Einführschlitz
- 9: Innenraum
- 10: Rollostoff
- 11: Ausziehspriegel
- 12: Kupplungsteil
- 13: gerader D-Schenkel
- 14: ausgebauchter D-Schenkel
- 15: Rundbiegung
- 16: Einführspalt
- 17: Kederdraht
- 18: Grundkörper
- 19: Endseite
- 20, 20a: Wandungsabschnitt
- 21: Haltesteg
- 22: Schwächungsstelle
- 23: Raststeg
- 24: Nase
- 25: Pfeil
- 26: Pfeil
- 27: Pfeil
- 28: Pfeil

## Patentansprüche

1. Rollo-Anordnung zum wahlweisen Abdecken einer transparenten Fahrzeug-Karosseriefläche, wie etwa eines Dach-Glasdeckels, mit einem Rollostoff (10), einem an dessen Vorderende befestigten, als Hohlprofilteil mit einem Innenraum (9) gebildeten Ausziehspriegel (11), und einem in seitliche Führungsschienen eingreifenden stabförmigen Kupplungsteil (12) zur Verbindung des Ausziehspriegels (11) mit seitlichen Führungen,
**dadurch gekennzeichnet, daß**
der Ausziehspriegel (11) einen axialen Einführschlitz (8) aufweist, durch den hindurch das Kupplungsteil (12) durch eine Eindrehbewegung in den Innenraum (9) einführbar ist, und
das Kupplungsteil (12) am Ende der Eindrehbewegung im Rastsitz in dem Innenraum (9) verrastbar ist.

2. Rollo-Anordnung nach Anspruch 1, **dadurch gekennzeichnet, daß** die Außenkontur des Kupplungsteils (12) zur formschlüssigen Aufnahme durch den Innenraum (9) des Ausziehspriegels (11) zumindest im wesentlichen dessen Kontur entspricht.

3. Rollo-Anordnung nach Anspruch 1 oder 2, **dadurch gekennzeichnet, daß** der Ausziehspriegel (11) im Querschnitt zumindest im wesentlichen eine D-Form mit einem geraden D-Schenkel (13) und einem ausgebauchten D-Schenkel (14) aufweist, wobei ein Ende des geraden D-Schenkels (13) mit einem Ende des ausgebauchten D-Schenkels (14) verbunden ist, und daß sich zwischen dem jeweils anderen Ende der beiden D-Schenkel (13, 14) der Einführschlitz (8) befindet, über den das Kupplungsteil (12) in den Rastsitz in den durch die beiden D-Schenkel (13, 14) begenzten Innenraum (9) einführbar ist..

4. Rollo-Anordnung nach Anspruch 2 oder 3, **dadurch gekennzeichnet, daß** der Innenraum (9) des Ausziehspriegels (11) zur Einführbarkeit des Kupplungsteils (12) durch axiale Drehung relativ zu dem Ausziehspriegel (11) einander gegenüberliegende, konzentrische, kreisbogenförmig gekrümmte Wandungsabschnitte (20, 20a) aufweist.

5. Rollo-Anordnung nach einem der Ansprüche 1 bis 4, **dadurch gekennzeichnet, daß** der Ausziehspriegel (11) das in seinen Innenraum (9) vollständig eingeführte Kupplungsteil (12) im Bereich des Einführschlitzes (8) mittels eines Haltestegs (21) rastend hintergreift, der einen von zwei axialen Rändern des Einführschlitzes (8) bildet.

6. Rollo-Anordnung nach Anspruch 5, **dadurch gekennzeichnet, daß** vom Kupplungsteil (12) mittels einer axial verlaufenden Schwächungsstelle (22) ein Raststeg (23) abtrennt ist, der mit dem Haltesteg (21) federnd zusammenwirkt.

7. Rollo-Anordnung nach Anspruch 6, **dadurch gekennzeichnet, daß** der Raststeg eine Nase (24) umfaßt, die aus dem Einführschlitz (8) zur Lösung des Rasteingriffs des Raststegs (23) am Haltesteg (21) vorsteht.

8. Rollo-Anordnung nach Anspruch 5, 6 oder 7, **dadurch gekennzeichnet, daß** der dem Haltesteg (21) gegenüberliegende Rand des Einführschlitzes (8) zur Aufnahme des ein Versteifungsteil (17), beispielsweise einen Kederdraht enthaltenden Vorderendes des Rollostoffes (10) in Gestalt einer nach außen offenen Rundbiegung (15) auswärts umgebogen ist.

## Claims

1. Roller blind arrangement for the optional covering of a transparent vehicle body area, such as a glass roof cover, having a roller blind material (10), a pull-out support (11) fixed to the front end of the latter and formed as a hollow profiled part with an interior (9), and a rod-like coupling part (12) engaging in lateral guide rails to connect the pull-out support (11) to lateral guides,
**characterized in that**
the pull-out support (11) has an axial insertion slot (8) through which the coupling part (12) can be inserted into the interior (9) by means of a turning-in movement, and
the coupling part (12) can be latched in the interior (9) with a latching fit at the end of the turning-in movement.

2. Roller blind arrangement according to Claim 1, **characterized in that** the outer contour of the coupling part (12) at least substantially matches the contour of the interior (9) of the pull-out support (11) in order to be held by the latter with a form fit.

3. Roller blind arrangement according to Claim 1 or 2, **characterized in that** the pull-out support (11) has in cross section at least substantially a D shape with a straight D-leg (13) and a bulged-out D-leg (14), one end of the straight D-leg (13) being connected to one end of the bulged-out D-leg (14), and **in that** between the respective other ends of the two D-legs (13, 14) there is the insertion slot (8), via which the coupling part (12) can be inserted into the latching fit in the interior (9) bounded by the two D-legs (13, 14).

4. Roller blind arrangement according to Claim 2 or 3, **characterized in that**, in order to be able to insert the coupling part (12) by means of axial rotation relative to the pull-out support (11), the interior (9) of the pull-out support (11) has mutually opposite, concentric, arcuately curved wall sections (20, 20a).

5. Roller blind arrangement according to one of Claims 1 to 4, **characterized in that** the pull-out support (11) engages in a latching manner behind the coupling part (12) inserted completely into its interior (9) in the region of the insertion slot (8) by means of a retaining web (21), which forms one of two axial edges of the insertion slot (8).

6. Roller blind arrangement according to Claim 5, **characterized in that** a latching web (23) which interacts in a sprung manner with the retaining web (21) is divided off from the coupling part (12) by means of a weakening point (22) that runs axially.

7. Roller blind arrangement according to Claim 6, **characterized in that** the latching web comprises a lug (24) which protrudes from the insertion slot (8) in order to release the latching engagement of the latching web (23) on the retaining web (21).

8. Roller blind arrangement according to Claim 5, 6 or 7, **characterized in that** the edge of the insertion slot (8) which is opposite the retaining web (21) is bent over outwards in the shape of an outwardly open rounded bent portion (15) in order to accommodate the front end of the roller blind material (10) containing a stiffening part (17), for example a piping wire.

## Revendications

1. Store à enrouleur pour l'occultation sélective d'une surface transparente d'une carrosserie de véhicule, comme par exemple un panneau vitré de toit, comprenant une étoffe déroulable (10) ; un arceau de déploiement (11) fixé à l'extrémité antérieure de ladite étoffe et réalisé sous la forme d'une pièce profilée creuse munie d'une cavité (9) ; et une pièce d'accouplement (12) en forme de barrette, pénétrant dans des glissières longitudinales de guidage et destinée à relier ledit arceau de déploiement (11) à des guides longitudinaux,
**caractérisé par le fait que**
l'arceau de déploiement (11) présente une fente d'insertion (8) à travers laquelle la pièce d'accouplement (12) peut être introduite dans la cavité (9) par un mouvement rotatoire de pénétration ; et
ladite pièce d'accouplement (12) peut être encliquetée dans ladite cavité (9) à la fin du mouvement rotatoire de pénétration, en s'ajustant par déclic.

2. Store à enrouleur selon la revendication 1, **caractérisé par le fait que** le profil extérieur de la pièce d'accouplement (12) correspond au moins sensiblement au profil de l'arceau de déploiement, de manière à être logée par concordance de formes dans la cavité (9) dudit arceau de déploiement (11).

3. Store à enrouleur selon la revendication 1 ou 2, **caractérisé par le fait que** l'arceau de déploiement (11) revêt en coupe transversale, au moins pour l'essentiel, la forme d'un D comprenant une branche rectiligne (13) et une branche ventrue (14), une extrémité de ladite branche rectiligne (13) du D étant reliée à une extrémité de ladite branche ventrue (14) du D ; et **par le fait que** la fente d'insertion (8) se trouve entre les autres extrémités respectives des deux branches (13, 14) du D, fente par l'intermédiaire de laquelle la pièce d'accouplement (12) peut être introduite, avec ajustement par déclic, dans la cavité (9) délimitée par les deux branches (13, 14) du D.

4. Store à enrouleur selon la revendication 2 ou 3, **caractérisé par le fait que** la cavité (9) de l'arceau de déploiement (11) présente des zones concentriques de paroi (20, 20a) à courbure en arc de cercle, se faisant mutuellement face, en vue d'autoriser l'introduction de la pièce d'accouplement (12) par rotation axiale vis-à-vis dudit arceau de déploiement (11).

5. Store à enrouleur selon l'une des revendications 1 à 4, **caractérisé par le fait que** l'arceau de déploiement (11) vient s'encliqueter par-derrière sur la pièce d'accouplement (12) entièrement introduite dans sa cavité (9), dans la région de la fente d'insertion (8), au moyen d'une membrure de retenue (21) matérialisant l'un de deux rebords axiaux de ladite fente d'insertion (8).

6. Store à enrouleur selon la revendication 5, **caractérisé par le fait qu'**un mentonnet encliquetable (23), coopérant élastiquement avec la membrure de retenue (21), est séparé d'avec la pièce d'accouplement (12) au moyen d'une zone amincie (22) s'étendant axialement.

7. Store à enrouleur selon la revendication 6, **caractérisé par le fait que** le mentonnet encliquetable comporte un lobe (24) saillant au-delà de la fente d'insertion (8), en vue de supprimer la prise établie par déclic entre ledit mentonnet encliquetable (23) et la membrure de retenue (21).

8. Store à enrouleur selon la revendication 5, 6 ou 7, **caractérisé par le fait que** le rebord de la fente d'insertion (8), tourné à l'opposé de la membrure de retenue (21), est courbé vers l'extérieur sous la forme d'un arrondi (15) ouvert vers l'extérieur, afin de recevoir l'extrémité antérieure de l'étoffe déroulable (10) qui renferme une pièce de rigidification (17), par exemple une armature longiligne.
